# EUROPÄISCHE PATENTSCHRIFT

(11) **EP 4 073 379 B1**
(45) Veröffentlichungstag und Bekanntmachung des Hinweises auf die Patenterteilung: **05.02.2025**
(21) Anmeldenummer: 20824175.2
(22) Anmeldetag: 09.12.2020
(51) Int. Cl.: F03G 3/08

(54) **HYDROPNEUMATISCHES SCHWUNGRAD ZUR ENERGIESPEICHERUNG**
HYDROPNEUMATIC FLYWHEEL FOR ENERGY STORAGE
VOLANT D'INERTIE HYDROPNEUMATIQUE POUR STOCKAGE D'ÉNERGIE

(30) Priorität: 10.12.2019 DE 102019133840
(43) Veröffentlichungstag der Anmeldung: 19.10.2022
(73) Patentinhaber: Hochschule Flensburg, 24943 Flensburg (DE)
(72) Erfinder: JAUCH, Clemens, 24943 Flensburg (DE)
(74) Vertreter: Heinemeyer, Karsten
(86) Internationale Anmeldenummer: PCT/EP2020/085226
(87) Internationale Veröffentlichungsnummer: WO 2021/116154

(56) Entgegenhaltungen:
- FR-A1- 3 062 428
- JP-A- S58 651
- US-A1- 2011 259 143
- US-B2- 8 590 420

## Beschreibung

Die Erfindung betrifft ein Schwungrad umfassend einen Rotationshohlkörper mit einem starr verbundenen Schaft entlang der Rotationsachse des Hohlkörpers und Mittel zur mechanischen Ankopplung des Schafts an einen Rotationsenergie-Erzeuger und/oder -Verbraucher. Insbesondere betrifft die Erfindung ein Schwungrad mit variablem Trägheitsmoment, welches durch die Verlagerung von flüssiger Schwungmasse variiert wird.

Ein solches Schwungrad kann zur Energiespeicherung z.B. in elektrischen Energienetzen dienen. Durch die wachsende Hinwendung zur nicht-fossilen und nicht-nuklearen Energieerzeugung werden konventionelle Kraftwerke durch erneuerbare Energieerzeuger ersetzt. Die meiste erneuerbar erzeugte Energie wird durch Photovoltaikanlagen und Windenergieanlagen erzeugt. Diese beiden Technologien speisen ihre Energie über Frequenzumrichter in das elektrische Netz ein. Andere erneuerbare Energieerzeuger speisen ihre Energie über direkt mit dem Netz verbundene rotierende Generatoren ein, z.B. in Wasserkraftwerken, Biomassekraftwerken, geothermischen Kraftwerken und Gezeitenkraftwerken.

Die erneuerbaren Energien sind dabei mehr oder weniger volatil, d.h. sie stehen nicht jederzeit mit gleicher Leistung zur Verfügung, und die Leistungsschwankung ist auch nicht immer vorhersehbar. Eine ähnliche Volatilität besteht auch auf der Verbraucherseite. In einem Wechselspannungsnetz muss die erzeugte Leistung zu jedem Zeitpunkt der verbrauchten Leistung entsprechen. Ist dieses Leistungsgleichgewicht nicht gegeben, verändert sich die Frequenz der Wechselspannung. Die Frequenz des Wechselspannungsnetzes konstant zu halten, wird üblich auch bezeichnet als die Aufgabe, die Netzfrequenzstabilität zu gewährleisten. Dafür sind Energiespeicher erforderlich, die überschüssig erzeugte Energie schnell aufnehmen und bei Unterversorgung durch erhöhte Last auch schnell wieder abgeben können.

Eine spezielle Form der Energiespeicher sind Schwungradspeicher. Wenn diese mit einer Wechselspannungsmaschine mechanisch gekoppelt sind, dann können sie mit ihrer Trägheit die sogenannte Momentanreserve darstellen. Um ein Ungleichgewicht zwischen Erzeugung und Verbrauch in einem Wechselspannungsnetz zu beseitigen, werden Regelungsmechanismen eingesetzt. Der schnellste Regelungsmechanismus ist die Primärregelung, welche mit schnell regelbaren Kraftwerken versucht, das Gleichgewicht wiederherzustellen. Die Primärregelung ist aber nicht beliebig schnell verfügbar, sondern benötigt eine kurze Anlaufzeit. Zur Überbrückung dient die praktisch sofort verfügbare Momentanreserve. Sie ist unerlässlich, um ein Entgleisen der Netzfrequenz zu vermeiden bis Primärregelkraftwerke ihre Leistung angepasst haben.

Eine spezielle Anwendung von Schwungradspeichern ist die unterbrechungsfreie Stromversorgung (USV) von Computersystemen bei Ausfall der Netzversorgung bis Notstromaggregate starten.

Zu den bekannten Vorteilen von Schwungradspeichern zählen ihr Vermögen, für kurze Zeit erhebliche Leistungen bereitzustellen, und ihre praktisch unbegrenzte Zyklierfähigkeit, d.h. das Be- und Entladen von Schwungrädern mit Energie kann beliebig oft wiederholt werden. Die bekannten Nachteile liegen in der relativ geringen speicherbaren Energiemenge pro Schwungmasseneinheit, den nicht zuletzt dadurch hohen Speicherkosten, der sehr hohen Selbstentladung durch Reibung (bis zu 15 % pro Stunde) und der Möglichkeit des katastrophalen Berstens bei hohem Energiegehalt und Materialüberlastung. Bei der möglichen Verwendung in Fahrzeugen kann noch das unerwünschte Auftreten von Drehmomenten senkrecht zur Rotationsachse (führt zu Nick- und Kippbewegungen der Rotationsachse) hinzukommen, die aus der Drehimpulserhaltung resultieren.

Die Druckschrift US 2005/077881 A1 beschreibt ein System zur Netzfrequenzstabilisierung mit stationären Schwungrädern mit jeweils fester Schwungmasse und vorbekanntem Trägheitsmoment. Das System besteht üblich aus einer Mehrzahl von Schwungrädern, von denen jedes einzelne seine Drehzahl erhöhen oder verringern muss, wenn es Energie aufnehmen oder abgeben soll, respektive. Das System weist eine Kontrolleinrichtung auf, die den Netzzustand und den Ladezustand jedes Schwungrades überwacht und wiederkehrend neu entscheidet, welches Schwungrad aktuell mit Energie beladen und welches entladen werden soll, um Schwankungen im Netz auszugleichen.

Systeme nach Art der US 2005/077881 A1 sind in der Praxis umgesetzt und funktionsfähig. Sie setzen voraus, dass eine relativ große Zahl an Schwungradspeichern am selben Ort ("flywheel plant") vorhanden sind und alle kontinuierlich ohne Zeitversatz überwacht und angesteuert werden können.

Wenn man ein einzelnes Schwungrad oder aber eine Vielzahl von Schwungradspeichern über große Areale verteilt betreiben möchte, ohne dass diese mit einer Kontrolleinrichtung oder untereinander kommunizieren können, dann bieten sich hierfür mit einer Wechselspannungsmaschine gekoppelte Schwungräder mit variablem Trägheitsmoment ("variable inertia", VI) an, weil diese die prinzipielle Möglichkeit besitzen, bei quasi-konstant bleibender Drehzahl Energie aufzunehmen oder abzugeben. Je nach Anzahl P der Polpaare in der Wechselspannungsmaschine kann dann beispielsweise eine quasi-konstante Drehzahl von 3000/P U/min dafür sorgen, dass elektrische Energie mit der gewünschten Netzfrequenz f = 50 Hz abgegeben oder aufgenommen wird.

Ein Vorschlag, die Netzfrequenzstabilität mit VI-Schwungrädern zu garantieren, ist der Druckschrift WO 2014/161030 A1 zu entnehmen. Dort werden überwiegend feste, in ihrem Abstand zur Drehachse kontrolliert veränderliche Massenelemente vorgeschlagen, mit denen sich die Trägheitsmomente der Schwungräder einstellen lassen. Es kommt auch eine flüssige Schwungmasse in einem parabolisch geformten Hohlraum innerhalb eines Schwungrades zur Sprache. Diese Flüssigkeit befindet sich auch im ruhenden Zustand im Schwungrad, wo sie den unteren Bereich des Paraboloid-Hohlraums ausfüllt. Sie wird bei beginnender Rotation des Schwungrades in Richtung auf die Außenwand des Hohlraumes beschleunigt und steigt dabei zugleich entlang dieser Außenwand empor. Das Trägheitsmoment wird durch die Massenverlagerung erhöht. Über eine tatsächliche Steuerung der Massenverteilung des Fluids - insbesondere senkrecht zur Rotationsachse - gibt die Druckschrift aber nur sehr vage Auskunft; sie verweist allgemein auf Druck oder mechanische Mittel.

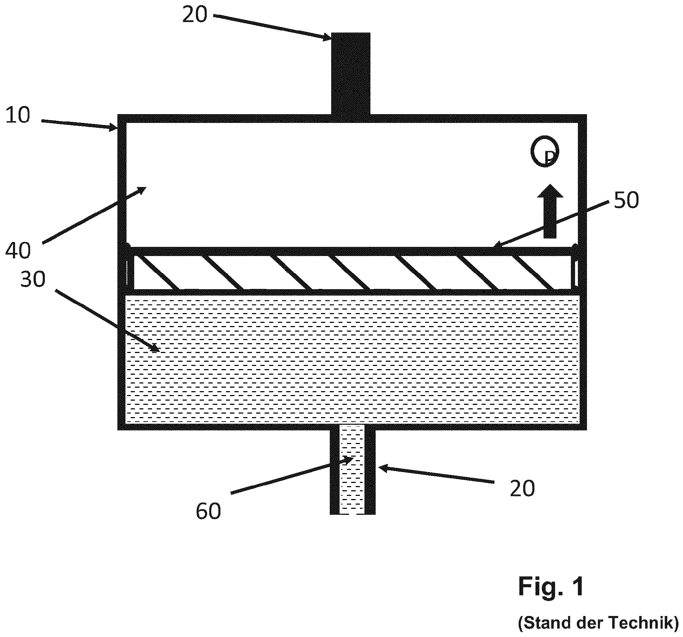

Das Schwungrad von Van de Ven aus der Druckschrift US 8590420 B2 sieht keine vorbestimmte Menge an fluider Schwungmasse vor, sondern gestattet das Befüllen des Schwungrades aus einem beigestellten Fluidmassen-Reservoir, das unter Normaldruck (1013 hPa) steht. Wie in Fig. 1 skizziert, besteht das Schwungrad aus einem zylindrischen Hohlkörper (10), in dessen Innern zwei voneinander gasdicht separierte Hohlräume (30, 40) entlang der Rotationsachse hintereinander angeordnet sind. Die Trennwand (50) zwischen den Hohlräumen (30, 40) dient als ein beweglicher (angedeutet durch Pfeile rechts im Bild) Medientrenner, die gasdicht mit der Zylinderinnenwand abschließend ausgebildet ist. Die Volumina der beiden Hohlräume (30, 40) sind somit variabel und lediglich in Summe konstant. Starr mit dem Hohlkörper (10) verbunden ist ein Schaft (20) entlang der Rotationsachse des Hohlkörpers. Der Schaft (20) ist hier unterbrochen, d.h. er verläuft nicht als Ganzes entlang der Rotationsachse, weil er sonst auch die bewegliche Trennwand (50) gasdicht durchqueren müsste. Der Schaft (20) dient der drehbaren Lagerung des Hohlkörpers (10) und der mechanischen Ankopplung an einen Rotationsenergie-Erzeuger und/oder -Verbraucher (nicht dargestellt). Zur Ankopplung weist der Schaft (20) grundsätzlich zweckdienliche Mittel auf, beispielsweise wenigstens abschnittsweise ein Sechskant-Außenprofil oder ein montiertes Zahnrad oder dergleichen (nicht dargestellt).

Konkret in der Erfindung von Van de Ven ist ein Fluid austauschender Kanal (60) zwischen dem besagten Fluidmassen-Reservoir (nicht dargestellt) und dem ersten Hohlraum (30) vorgesehen. Im zweiten Hohlraum (40) wird eine Rückstellfeder eingerichtet, die eine Kraft auf die Trennwand (50) in Richtung auf den ersten Hohlraum (30) ausübt. Diese Kraft nimmt zu, wenn die Trennwand (50) zur Verkleinerung des zweiten Hohlraumes (40) verschoben wird. In seiner bevorzugten Ausführung realisiert Van de Ven die Rückstellfeder durch ein im zweiten Hohlraum (40) eingeschlossenes Gasvolumen, das unter einem vorbestimmten erhöhten Gasdruck steht (symbolisiert durch das P im Kreis in der Skizze).

Van de Ven weist in seiner Beschreibung nach, dass das Schwungrad der Fig. 1 selbsttätig drehzahlstabil läuft. Wird dem Schwungrad (10) über den Schaft (20) zusätzliche Energie zugeführt, wobei sich die Drehzahl infinitesimal erhöht, so steigt der Druck des Fluids im ersten Hohlraum (30) auf die Trennwand (50), vor allem an deren Rand, wo das Fluid die größte Bahngeschwindigkeit besitzt. Die Trennwand (50) wird in Richtung auf den zweiten Hohlraum (40) verschoben und verkleinert diesen. Dadurch erhöht sich dort der Gasdruck, während im ersten Hohlraum (30) über den Kanal (60) Fluid aus dem Reservoir nachgesogen wird. Die zugeführte Energie wird simultan in zwei Formen gespeichert, nämlich (i) als zusätzliche kinetische Energie im Schwungradspeicher, dessen Trägheitsmoment durch den Zufluss von Fluid bei quasi-gleichbleibender Drehzahl erhöht wird, und (ii) als potenzielle Energie im verkleinerten Hohlraum (40) mit erhöhtem Gasdruck. Die Entnahme von Energie erfolgt genauso umgekehrt, indem eine Verringerung des Fluiddrucks im ersten Hohlraum (30) mit einer simultanen Gasexpansion des zweiten Hohlraumes (40) verbunden ist, und somit wie bei einer Spritze Fluid durch den Kanal (60) abtransportiert wird. Das an sich sehr einfache, selbsttätig die Drehzahl regelnde Konzept der US 8590420 B2 mit einer flüssigen Schwungmasse, die gegen einen Gasdruck an arbeitet, um kinetische und potenzielle Energie simultan zu speichern, kann auch als hydropneumatisches Schwungrad bezeichnet werden. Die Ausgestaltung von Van de Ven hat allerdings einige gravierende Nachteile:
Das Fluid füllt den gesamten ersten Hohlraum (30) aus und rotiert als solches insgesamt. Dadurch ist eine viel größere Fluidmasse erforderlich, um ein bestimmtes Massenträgheitsmoment zu erzeugen, als wenn die Fluidmasse nur nahe an der Hohlraumwand rotieren würde. Das System ist ferner anfällig für druckbedingte Deformationen. Die Wand des Hohlzylinders (10) muss sehr steif gebaut sein, da sonst der Druck des rotierenden Fluids zu einer radialen Aufweitung führt, die die Dichtungen der Trennwand (50) undicht werden lässt. Das Vermeiden einer radialen Aufweitung in hydropneumatischen Kolbenspeichern - als Vergleichsbeispiel - erfordert einen wirtschaftlich unwillkommenen Materialaufwand. An den Dichtungen der Trennwand (50) herrscht ohnehin immer auf der Fluidseite ein höherer Druck als auf der Gasseite, da die mit dem Radius ansteigenden Fliehkräfte den Fluiddruck parabolisch von der Rotationsachse aus ansteigen lassen. Der Gasdruck auf der anderen Seite der Trennwand (50) ist hingegen unabhängig vom Radius. Somit wird die Dichtung einseitig und dauerhaft mit einem Druckgefälle beaufschlagt. Um Fluidübertritt zu verringern, muss mit straff anliegenden Dichtungen gearbeitet werden, die nennenswerte Reibung verursachen und Abrieb der Dichtungen bei einer sehr großen Anzahl von Lastspielen bewirken. Der Wartungsaufwand ist dadurch sehr groß, und Fluidübertritt wird sich bei dauerhaft geladenem Schwungrad kaum vermeiden lassen.

Van de Ven hat auch angeregt, Leitbleche zur Vermeidung von Energieverlusten durch Schlupf im Fluid im Innern des ersten Hohlraumes (30) anzuordnen. Dies ist erkennbar technisch problematisch bei einer beweglichen Trennwand (50), die das gesamte Fluid aus eben diesem Hohlraum (30) herausdrücken können soll ohne dabei undicht zu werden. Überdies führt die Beschleunigung eines Fluidpartikels auf seinem Weg vom Kanal (60) im Rotationszentrum zu einem nicht vorhersagbaren Ort in dem ersten Hohlraum (30) zu Schlupf und Strudelbildung im Fluid. Diese Effekte bewirken unweigerlich zusätzliche Energieverluste bei jeder Veränderung des Ladezustandes.

Die Erfindung stellt sich die Aufgabe, das Konzept des hydropneumatischen Schwungrades dahingehend weiterzuentwickeln, dass die vorgenannten Nachteile vermieden werden.

Die Aufgabe wird gelöst durch ein Schwungrad umfassend einen Rotationshohlkörper (10) mit einem starr verbundenen Schaft (20) entlang der Rotationsachse des Hohlkörpers (10) und Mittel zur mechanischen Ankopplung des Schafts (20) an einen Rotationsenergie-Erzeuger und/oder -Verbraucher, wobei der Hohlkörper (10) wenigstens einen ersten Hohlraum (30) und einen zweiten Hohlraum (40) mit durch den Hohlkörper (10) gebildeten Hohlraumwänden umschließt, wobei die Hohlräume (30, 40) durch eine Trennwand (50) voneinander separiert und entlang der Rotationsachse hintereinander angeordnet sind, wobei der Schaft (20) wenigstens abschnittsweise einen Kanal (60) zur Fluid austauschenden Kommunikation zwischen einem Reservoir mit fluider Schwungmasse und dem ersten Hohlraum (30) aufweist, wobei der zweite Hohlraum (40) zur Aufnahme eines Gasüberdrucks ausgebildet ist, dadurch gekennzeichnet, dass
a. die Trennwand (50) unbeweglich und gasdicht mit dem Hohlkörper (10) verbunden ist und
b. eine Mehrzahl von Kanälen (90) zur Fluid austauschenden Kommunikation zwischen dem ersten Hohlraum (30) und dem zweiten Hohlraum (40) derart angeordnet sind, dass
c. die Kanäle (90) jeweils in die Bereiche der Hohlraumwände mit größtem Abstand zur Rotationsachse münden.

Die Unteransprüche geben vorteilhafte Ausgestaltungen an.

Die Erfindung wird nachfolgend erläutert anhand von Figuren. Dabei zeigt:
Fig. 1 eine Skizze des VI-Schwungrades nach Van de Ven (Stand der Technik);
Fig. 2 eine Skizze eines VI-Schwungrades gemäß der vorliegenden Erfindung;
Fig. 3 eine Skizze eines alternativ ausgestalteten VI-Schwungrades gemäß der Erfindung.

Die Erfindung erzielt die angestrebte Verbesserung durch die Erkenntnis, dass eine bewegliche Trennwand (50) als Medientrenner fundamental nachteilig und auch unnötig ist, wenn das komprimierte Gas im zweiten Hohlraum (40) nur mit Fluid in Kontakt kommen kann, das einen entsprechend hohen Fluiddruck aufgrund seiner Rotationsgeschwindigkeit aufweist.

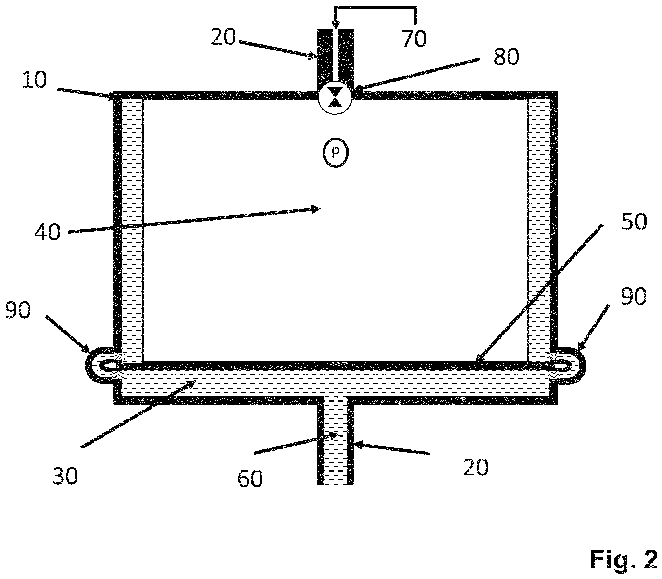

Wie in Fig. 2 dargestellt, bedeckt das Fluid bevorzugt den am schnellsten bewegten Bereich der Innenwand des Hohlraumes (40), wenn das Fluid in den von Van de Ven nur für Gas vorgesehenen zweiten Hohlraum (40) eintritt. Das Fluid wird dabei durch seine Masse infolge der Zentrifugalkraft vom Gas getrennt, d.h. es bedarf keines separaten Medientrenners. Tatsächlich bildet die Oberfläche einer fluiden Masse in Rotation um eine Achse, die entlang der Schwerkraftrichtung verläuft, einen Paraboloid aus. Bereits bei relativ kleinen Drehzahlen, von z.B. einigen 100 U/min, und Radien von wenigen Zentimetern, ist der Parabelverlauf jedoch so steil, dass man näherungsweise von einer planen Oberfläche wie in Fig. 2 gezeichnet ausgehen kann.

Die erfindungsgemäß angeordneten Kanäle zwischen den Bereichen der Wände der Hohlräume (30, 40), die den größten Abstand zur Rotationsachse aufweisen, sind offen und können zwar vom Fluid, aber nicht vom komprimierten Gas, ungehindert passiert werden. Auf diese Weise kann eine Energiezufuhr wie bei Van de Ven über die Steigerung der fluiden Masse durch Zufluss aus einem Fluidmassen-Reservoir über den Kanal (60) im Schaft (20) zunächst in den ersten Hohlraum (30) erfolgen. Der erste Hohlraum (30) ist jetzt aber erfindungsgemäß in seinem Volumen fixiert, weil die Trennwand (50) unbeweglich und gasdicht mit dem Hohlkörper (10) verbunden ist. Weiter zufließendes Fluid kann aber gleichwohl über die offenen Kanäle (90) vom äußeren Rand des ersten Hohlraumes (30) in den äußeren Rand des Hohlraumes (40) übertreten, wo es sich aufgrund der Rotation des Hohlkörpers (10) sofort entlang der Hohlraumwand mit möglichst großem Abstand zur Rotationsachse, d.h. zum Schaft (20), verteilt. Das Gasvolumen wird in Entsprechung zum zugeführten Fluidvolumen verringert, d.h. der Gasdruck im zweiten Hohlraum (40) steigt an.

Durch den erfindungsgemäß freien Fluidaustausch über offene Kanäle, welche die am schnellsten bewegten Bereiche der Hohlraumwände der Hohlräume (30, 40) miteinander verbinden, wird nur ein relativ kleines Volumen des ersten Hohlraumes (30) benötigt. Vorzugsweise beträgt sein Volumen weniger als ein Zehntel des Volumens des zweiten Hohlraumes (40). Die Funktion des ersten Hohlraums (30) umfasst die einer Beschleunigungsstrecke für das aus dem Kanal (60) im Schaft (20) eintretende Fluid und die der Zuleitung des Fluids zum außen liegenden Hochgeschwindigkeitsbereich. Ein festes, kleines Volumen des Hohlraumes (30) vermeidet unnötige, langsam rotierende fluide Schwungmasse im System und reduziert so Schlupf und Strudelbildung. Überdies wird mit weniger fluider Schwungmasse ein größeres Trägheitsmoment erreicht.

Die Trennwand (50) zwischen den Hohlräumen (30, 40) ist unbeweglich und gasdicht mit dem Rotationshohlkörper (10) verbunden, d.h. sie ist beispielsweise stoffschlüssig mit den Innenwänden des Hohlkörpers (10) verschweißt, verschmolzen oder verklebt, und ein Gasübertritt aus dem zweiten Hohlraum (40) in den ersten Hohlraum (30) durch die Trennwand hindurch ist unmöglich. Insbesondere ist die Trennwand (50) so auszulegen, dass sie einem Druckgradienten zwischen den Hohlräumen (30, 40) standhält. Die Trennwand (50) versteift den Hohlkörper (10) und wirkt einer radialen Aufweitung dadurch entgegen. Die Trennwand (50) ist in Grenzen reversibel dehnbar, und eine begrenzte radiale Aufweitung des Hohlkörpers (10) in Verbindung mit der Trennwand (50) kann auch stattfinden ohne irgendeinen negativen Einfluss auf die Gasdichtigkeit der Trennwand (50).

Da das erfindungsgemäße Schwungrad keine beweglichen Teile im Innenraum umfasst, ist der Wartungsaufwand minimal. Überdies können problemlos Leitbleche an den Innenwänden der Hohlräume angeordnet werden, die eine bessere Mitnahme des Fluids durch die Rotation des Hohlkörpers (10) gewährleisten. Die Leitbleche können dabei als radiale Schotten ausgestaltet sein, die den gesamten ersten Hohlraum (30) von der Hohlraumwand zur Rotationsachse mit dem Kanal (60) durchziehen. Der Schaft (20) kann vorzugsweise die Hohlräume (30, 40) durchgängig durchsetzen und dabei mit den Schotten stoffbündig abschließen. Die Leitbleche können genauso als radiale Schotten im zweiten Hohlraum (40) vorgesehen sein und durch die Befestigung am durchgehenden Schaft (20) eine weitere Versteifung des Hohlkörpers (10) bewirken.

Ferner ist es zweckmäßig, die Anzahl und Anordnung der Fluid austauschenden Kanäle (90) auf die Anzahl und Anordnung der Leitbleche abzustimmen. Vorzugsweise sind die Mehrzahl von Kanälen (90) zur Fluid austauschenden Kommunikation zwischen dem ersten (30) und dem zweiten Hohlraum (40) als symmetrisch zur Rotationsachse verteilte Rohrverbindungen ausgebildet. Dabei kann dann jede Rohrverbindung in beiden Hohlräumen (30, 40) zwischen je zwei Leitblechen münden, wobei jedem Bereich zwischen zwei Leitblechen wenigsten eine Rohrverbindung zugeordnet ist.

Die Leitbleche können aus Metall bestehen, sind aber nicht darauf beschränkt. Grundsätzlich erscheint es vorteilhaft, wenn die Leitbleche bereits bei der Herstellung des Rotationshohlkörpers (10) aus demselben Material gefertigt werden. Dies kann beispielsweise ein hochreißfestes Polymerkomposit, etwa ein Faserverbundwerkstoff sein.

Wie bereits erwähnt, kann mit weniger Fluidmasse ein größeres Trägheitsmoment erreicht werden. Dies impliziert zugleich eine geringere Kompression des Gases im zweiten Hohlraum (40) im Vergleich zu Van de Ven. Um gleichwohl eine ausreichende Rückstellkraft auf die Fluidoberfläche zu realisieren, kann der Gasdruck angepasst, insbesondere erhöht, werden. Überhaupt ist es vorteilhaft, wenn man den Gasdruck im zweiten Hohlraum (40) im laufenden Betrieb des Schwungrades ändern, zumindest aber steigern, kann. Eine bevorzugte Ausgestaltung des Schwungrades sieht daher - wie in Fig. 2 gezeichnet - vor, dass der Schaft (20) wenigstens abschnittsweise einen mittels eines Ventils (80) absperrbaren Kanal (70) zur Gas austauschenden Kommunikation zwischen dem zweiten Hohlraum (40) und einem Kompressor und/oder Gasüberdruck-Reservoir, beispielsweise einer Gasflasche, aufweist. Das Einstellen eines vorbestimmten Gasdrucks im zweiten Hohlraum (40) bewirkt das Einstellen eines Arbeitspunktes der selbsttätigen Drehzahl-Stabilisierung des Schwungrades, legt also insbesondere die autonom aufrechtzuerhaltende Drehzahl fest. Das Ventil (80) kann dabei ansteuerbar ausgelegt sein, um den Gasdruck transient regeln zu können. Es muss dazu nicht wie in Fig. 2 gezeigt in der Schwungradstruktur integriert sein, sondern kann an jeder Stelle des Kanals (70) oder auch an den Zuleitungen zu Kanal (70) angeordnet sein. Wenn man auf eine Regelung von Ventil (80) verzichten will, kann es vorzugsweise als Rückschlagventil, das den Gasfluss aus dem zweiten Hohlraum (40) heraus absperrt, ausgeführt sein. In diesem Fall ist die Integration des Ventils (80) in den Schaft (20) zu bevorzugen, damit Kanal (70) und die Zuleitungen nicht unter Überdruck gehalten werden müssen. Das Nachfüllen von Gas durch Kanal (70) in den zweiten Hohlraum (40) kann gelegentlich erforderlich sein, um den Gasdruck zu halten, weil das Fluid geringe Mengen des Gases aufnehmen und bei Änderungen des Ladezustands des Schwungrades abtransportieren kann.

Ein geeignetes Fluid für das hydropneumatische Schwungrad ist ein Gemisch aus Wasser und Glykol, das sich durch eine Dichte von ca. 1000 kg/m³ auszeichnet. Fluide mit etwa dreifacher Dichte sind ebenfalls verfügbar, bedürfen aber einer Eignungsprüfung.

In dieser Beschreibung sollte der Begriff "Rotationshohlkörper" nicht strikt mathematisch als hohler Rotationskörper verstanden werden. Tatsächlich wird man mathematische Rotationskörper wie Zylinder, Ellipsoide oder Kegelstümpfe ganz bevorzugt für den Hohlkörper (10) und die von ihm umschlossenen Hohlräume (30, 40) in Betracht ziehen, schon um jede Unwucht im Schwungrad zu vermeiden. Vorzugsweise wird aber die Mehrzahl von Kanälen (90) zur Fluid austauschenden Kommunikation zwischen dem ersten (30) und dem zweiten Hohlraum (40) als Rohrverbindungen (90) ausgebildet und in N-zähliger - mit einer endlichen natürlichen Zahl N - rotationssymmetrischer Verteilung angeordnet sein.

Wie bereits angesprochen, ist ein kleines Volumen des ersten Hohlraumes (30) durchaus von Vorteil. Es ist daher vorteilhafterweise auch möglich, den ersten Hohlraum (30) sternförmig mit der N-zähligen Rotationssymmetrie der Anordnung der Rohrverbindungen (90) auszugestalten. Im Extremfall wird der erste Hohlraum (30) sogar nur noch durch lineare, vom Kanal (60) aus radial nach außen gerichtet verlaufende Rohre umschlossen, die sich dann nahtlos in die Kanäle (90) fortsetzen, welche wiederum in den zweiten Hohlraum (40) münden.

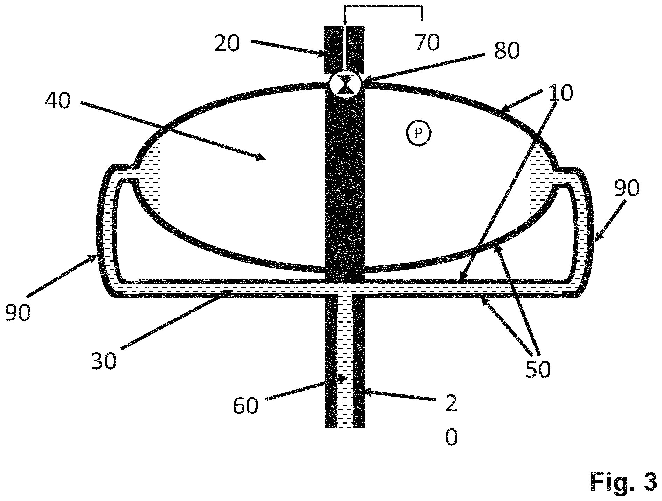

Die Fig. 3 skizziert einen solchen Aufbau mit einem Rotationshohlkörper (10), der aus einem hohlen Rotationsellipsoid (40) und einem sternförmigen Rohrgestänge (30) zusammengesetzt ist. Denkt man sich in Fig. 3 die Rohrverbindungen (90) weg und schließt man in Gedanken die offenen Wände, dann erkennt man die unbewegliche Trennwand (50) zwischen den Hohlräumen als bestehend aus der Unterseite des Ellipsoids (10) und den Rohrwänden des Gestänges ggf. mitsamt dem Luftspalt dazwischen.

Die Vorrichtung der Fig. 3 arbeitet erkennbar nach demselben Prinzip wie die der Fig. 2, unterscheidet sich jedoch vom Stand der Technik schon dadurch, dass jeder beliebige Rotationskörper zur Formgebung des zweiten Hohlraumes (40) herangezogen werden kann. Mit einem beweglichen Medientrenner wäre dies unmöglich. In Fig. 3 ist der Schaft (20) zudem exemplarisch aus einem Stück und das gesamte Schwungrad durchquerend ausgeführt. Dies bietet zusätzliche Möglichkeiten zum Vorsehen von Querverstrebungen im Hohlraum (40) zur Unterstützung der Formstabilität während der Rotation. Wie bereits erwähnt, könnte der durchgängige Schaft (20) genauso bei der Vorrichtung der Fig. 2 verwendet werden mit zusätzlichen Verstrebungen oder Schotten auch im ersten Hohlraum (30).

Eine weitere vorteilhafte Ausgestaltung kann darin bestehen, das Reservoir mit fluider Schwungmasse in einem Hohlraum im Innern des Schafts (20) anzuordnen. Der Durchmesser des Schafts (20) ist - vor allem innerhalb des zweiten Hohlraumes (40) - ein wählbarer Gestaltungsparameter. Insofern kann genügend Raum für eine fluide Schwungmasse bereitgestellt werden, die bereits auf relativ kleinem Radius mitrotiert, während sie noch im Reservoir verbleibt. Das Reservoir kann überdies oder alternativ auch so ausgelegt sein, dass der Füllstand der fluiden Masse die Oberseite des Hohlkörpers (10) überragt, zumindest dann, wenn sich das Schwungrad im energiearmen Zustand befindet. Der zum Fluidaustausch zwischen dem Reservoir und dem ersten Hohlraum (30) vorgesehene Kanal (60) verläuft in diesem Fall vollständig innerhalb des Schafts (20) und besitzt - anders als in den Figuren gezeichnet - keine Öffnung nach außen. Stattdessen kann man Öffnungen im Schaft (20) zur Belüftung des Reservoirs vorsehen, damit stets das Fluid bei jedem Füllstand des Reservoirs unter Normaldruck verbleibt. Der Vorteil dieser Anordnung ist insbesondere darin zu sehen, dass keinerlei Dichtungen, Drehdurchführung oder bewegliche Teile erforderlich sind, wenn man sich auf das selbstregelnde System beschränkt.

Abhängig allenfalls von der Anordnung und Belüftung des Fluidmassen-Reservoirs ist das erfindungsgemäße Schwungrad - wie auch das von Van de Ven - nicht darauf angewiesen, dass die Rotationsachse entlang der Schwerkraftrichtung ausgerichtet ist. Dies ist bei den meisten bekannten VI-Schwungräder mit fluider Schwungmasse eine signifikante Einschränkung, die hier unnötig ist, weil die das Fluid zurück nach innen treibende Kraft vom Gasdruck im zweiten Hohlraum (40) herrührt. Die in den Figuren skizzierten Vorrichtungen würden alle auch "auf den Kopf gestellt" genauso funktionieren können.

Abschließend soll noch darauf hingewiesen werden, dass das erfindungsgemäße Schwungrad vorzugsweise mit einer elektronischen Regelung betrieben werden kann, die das Ventil (80) zur Regelung des Gasdrucks im zweiten Hohlraum (40) und/oder eine Pumpe (nicht dargestellt) angeordnet im Kanal (60) zur Regelung der Fließgeschwindigkeit der Fluidmasse ansteuert. Zwar ist das Schwungrad intrinsisch drehzahlstabil an einem Arbeitspunkt, aber einerseits will man diesen Arbeitspunkt beim Anlaufen des Schwungrades möglichst schnell erreichen und andererseits auch bei Bedarf gezielt neu einstellen können. Überdies kann eine solche Regelung in Zusammenarbeit mit einer präzisen Drehzahlmessung - beispielsweise optisch über ein Stroboskop - auch ohne Sensorik im Innern des Schwungrades die Auswirkungen von Leckagen erkennen und entweder ausgleichend nachregeln oder - bei massiven Leckagen - die Entleerung des Schwungrades unterstützen, um die rotierende Masse schnell zu verringern und katastrophale Schäden zu vermeiden.

## Patentansprüche

1. Schwungrad umfassend einen Rotationshohlkörper (10) mit einem starr verbundenen Schaft (20) entlang der Rotationsachse des Hohlkörpers (10) und Mitteln zur mechanischen Ankopplung des Schafts (20) an einen Rotationsenergie-Erzeuger und/oder -Verbraucher, wobei der Hohlkörper (10) wenigstens einen ersten Hohlraum (30) und einen zweiten Hohlraum (40) mit durch den Hohlkörper (10) gebildeten Hohlraumwänden umschließt, wobei die Hohlräume (30, 40) durch eine Trennwand (50) voneinander separiert und entlang der Rotationsachse hintereinander angeordnet sind, wobei der Schaft (20) wenigstens abschnittsweise einen Kanal (60) zur Fluid austauschenden Kommunikation zwischen einem Reservoir mit fluider Schwungmasse und dem ersten Hohlraum (30) aufweist, wobei der zweite Hohlraum (40) zur Aufnahme eines Gasüberdrucks ausgebildet ist, **dadurch gekennzeichnet, dass**
a. die Trennwand (50) unbeweglich und gasdicht mit dem Hohlkörper (10) verbunden ist und
b. eine Mehrzahl von Kanälen (90) zur Fluid austauschenden Kommunikation zwischen dem ersten Hohlraum (30) und dem zweiten Hohlraum (40) derart angeordnet sind, dass
c. die Kanäle (90) jeweils in die Bereiche der Hohlraumwände mit größtem Abstand zur Rotationsachse münden.

2. Schwungrad nach Anspruch 1, **dadurch gekennzeichnet, dass** der erste Hohlraum (30) weniger als ein Zehntel des Volumens des zweiten Hohlraumes (40) aufweist.

3. Schwungrad nach einem der vorangehenden Ansprüche, **dadurch gekennzeichnet, dass** der Schaft (20) wenigstens abschnittsweise einen mittels eines Ventils (80) absperrbaren Kanal (70) zur Gas austauschenden Kommunikation zwischen dem zweiten Hohlraum (40) und einem Kompressor und/oder Gasüberdruck-Reservoir aufweist.

4. Schwungrad nach Anspruch 3, **dadurch gekennzeichnet, dass** das Ventil (80) als Rückschlagventil ausgebildet ist, das den Gasfluss aus dem zweiten Hohlraum (40) heraus absperrt.

5. Schwungrad nach einem der vorangehenden Ansprüche, **dadurch gekennzeichnet, dass** die Mehrzahl von Kanälen (90) zur Fluid austauschenden Kommunikation zwischen dem ersten Hohlraum (30) und dem zweiten Hohlraum (40) als Rohrverbindungen ausgebildet und in N-zähliger rotationssymmetrischer Verteilung angeordnet sind.

6. Schwungrad nach Anspruch 5, **dadurch gekennzeichnet, dass** der erste Hohlraum (30) sternförmig mit der N-zähligen Rotationssymmetrie der Anordnung der Rohrverbindungen (90) ausgebildet ist.

7. Schwungrad nach Anspruch 6, **dadurch gekennzeichnet, dass** der erste Hohlraum (30) durch lineare, vom Kanal (60) aus radial nach außen gerichtet verlaufende Rohre umschlossen ist.

8. Schwungrad nach einem der vorangehenden Ansprüche, **dadurch gekennzeichnet, dass** das Reservoir mit fluider Schwungmasse in einem Hohlraum im Innern des Schafts (20) angeordnet ist.

## Claims

1. A flywheel comprising a rotating hollow body (10) having a rigidly connected shaft (20) along the axis of rotation of the hollow body (10) and means for mechanical coupling of the shaft (20) to a generator and/or consumer of rotational energy, wherein the hollow body (10) encloses at least one first hollow space (30) and one second hollow space (40) with hollow space walls formed by the hollow body (10), wherein the hollow spaces (30, 40) are separated from one another by a dividing wall (50) and are arranged one behind the other along the axis of rotation, wherein the shaft (20), at least in sections, has a channel (60) for fluid-exchanging communication between a reservoir with a fluidic flywheel mass and the first hollow space (30), wherein the second hollow space (40) is designed to receive an excess of gas pressure, **characterized in that**
a. the dividing wall (50) is connected to the hollow body (10) in an immovable and gas-tight manner, and
b. a plurality of channels (90) are arranged for fluid-exchanging communication between the first hollow space (30) and the second hollow space (40) in such manner that
c. the channels (90) respectively lead into the areas of the hollow space walls with the greatest distance to the axis of rotation.

2. The flywheel according to claim 1, **characterized in that** the first hollow space (30) has less than one tenth of the volume of the second hollow space (40).

3. The flywheel according to any one of the preceding claims, **characterized in that** the shaft (20), at least in sections, has a channel (70), which can be shut off by means of a valve (80), for gas-exchanging communication between the second hollow space (40) and a compressor and/or an excess gas pressure reservoir.

4. The flywheel according to claim 3, **characterized in that** the valve (80) is designed as a check valve, which shuts off the gas flow out of the second hollow space (40).

5. The flywheel according to any one of the preceding claims, **characterized in that** the plurality of channels (90) for fluid-exchanging communication between the first hollow space (30) and the second hollow space (40) are designed as pipe connections and are arranged in an N-numbered rotationally symmetrical distribution.

6. The flywheel according to claim 5, **characterized in that** the first hollow space (30) is designed star-shaped with the N-numbered rotational symmetry of the arrangement of the pipe connections (90).

7. The flywheel according to claim 6, **characterized in that** the first hollow space (30) is enclosed by linear pipes extending from the channel (60) in a radially outward direction.

8. The flywheel according to any one of the preceding claims, **characterized in that** the reservoir with the fluidic flywheel mass is arranged in a hollow space inside the shaft (20).

## Revendications

1. Volant d'inertie comprenant un corps creux de rotation (10) avec un arbre (20) relié rigidement le long de l'axe de rotation dudit corps creux (10) et des moyens pour le couplage mécanique dudit arbre (20) à un générateur et/ou un consommateur d'énergie de rotation, ledit corps creux (10) entourant au moins une première cavité (30) et une deuxième cavité (40) avec des parois de cavité formées par ledit corps creux (10), lesdites cavités (30, 40) étant séparées l'une de l'autre par une paroi de séparation (50) et disposées l'une derrière l'autre le long de l'axe de rotation, ladite tige (20) présentant au moins par sections un canal (60) pour la communication échangeant du fluide entre un réservoir avec une masse d'inertie fluide et ladite première cavité (30), ladite deuxième cavité (40) étant conçue pour recevoir une surpression de gaz,
**caractérisé en ce que**
a. ladite paroi de séparation (50) est immobile et reliée de face étanche au gaz avec ledit corps creux (10) et
b. une pluralité de canaux (90) pour une communication échangeant du fluide entre ladite première cavité (30) et ladite deuxième cavité (40) sont disposés de telle sorte que
c. lesdits canaux (90) débouchent respectivement dans les zones des parois de la cavité présentant la plus grande distance par rapport à l'axe de rotation.

2. Volant d'inertie selon la revendication 1, **caractérisé en ce que** ladite première cavité (30) présente moins d'un dixième du volume de ladite deuxième cavité (40).

3. Volant d'inertie selon l'une des revendications précédentes, **caractérisé en ce que** ladite tige (20) présente au moins par sections un canal (70) pouvant être fermé au moyen d'une soupape (80) pour la communication échangeant du gaz entre ladite deuxième cavité (40) et un compresseur et/ou un réservoir de surpression de gaz.

4. Volant d'inertie selon la revendication 3, **caractérisé en ce que** ladite soupape (80) est conçue comme un clapet anti-retour, qui bloque le flux de gaz hors de ladite deuxième cavité (40).

5. Volant d'inertie selon l'une des revendications précédentes, **caractérisé en ce que** ladite pluralité de canaux (90) pour la communication échangeant du fluide entre ladite première cavité (30) et ladite deuxième cavité (40) est réalisée sous forme de tuyauteries et est agencée selon une répartition à symétrie de rotation d'ordre N.

6. Volant d'inertie selon la revendication 5, **caractérisé en ce que** ladite première cavité (30) est en forme d'étoile avec la symétrie de rotation d'ordre N de l'agencement desdites tuyauteries (90).

7. Volant d'inertie selon la revendication 6, **caractérisé en ce que** ladite première cavité (30) est entourée par des tuyaux linéaires s'étendant radialement vers l'extérieur à partir dudit canal (60).

8. Volant d'inertie selon l'une des revendications précédentes, **caractérisé en ce que** le réservoir de masse d'inertie fluide est disposé dans une cavité à l'intérieur de ladite tige (20).
